# EUROPEAN PATENT APPLICATION

(11) **EP 2 008 558 A2**
(43) Date of publication of application: **31.12.2008**
(21) Application number: 08153440.6
(22) Date of filing: 27.03.2008
(51) Int. Cl.: A47J 39/02

(54) **Warming device for food containers**

(30) Priority: 27.06.2007 IT PD20070219
(71) Applicant: S.S.P.-Stainless Steel Performance S.p.A., 20124 Milano (IT)
(72) Inventor: Imazio, Oscar, 31020 San Pietro di Feletto (Treviso) (IT)
(74) Representative: Pulieri, Gianluca Antonio

(57) **Abstract**

A warming device (4) for food containers (8), in particular for plates, comprising ventilation means and warming means for an air flow to be directed towards the plates (8). The plates (8) are arranged on substantially hollow shelves (16) and the air flow is directed into distribution channels (48) obtained into the shelves (16).

## Description

The present invention relates to a warming device for food containers, commonly known as 'plate warmer', suitable for keeping the plates and the relevant food contained therein warm.

Warming devices are known in the art, comprising a containment box that in a space seats support shelves for the plates, warming means typically with electrical resistance and ventilation means. The ventilation means generate an air flow that after warming up subsequent to the passage on the warming means, is conveyed towards the plates.

Prior art solutions exhibit several disadvantages. For example, they exhibit considerable heat dispersions and for this reason they require expensive and cumbersome insulations of the plate seating space. Moreover, the prior art devices do not ensure an even warming; in fact, the plates first impinged by the air flow become much warmer than the plates arranged in the box opposite the warming means. For this reason, it is known in the art to make warming devices comprising a plurality of warming means and fans, arranged in multiple points of the space, so as to make the plate temperature as even as possible.

These solutions are again expensive and cumbersome.

The problem at the basis of the present invention is to provide a warming device for food containers which should solve the disadvantages mentioned above with reference to the prior art.

Such disadvantages and limits are solved by a device in accordance with claim 1.

Other embodiments of the device according to the invention are described in the subsequent claims.

Further features and the advantages of the present invention will appear more clearly from the following description of preferred non-limiting embodiments thereof, wherein:

figure 1 shows a front view of a warming device according to the present invention wherein some details have been omitted to allow viewing some internal details of the device;

figure 2 shows a front view of the device of figure 1, in a partly open configuration;

figure 3 shows a cutaway view of the device of figure 2, along the section line III-III of figure 2;

figure 4 shows a perspective view of the device of figure 2 wherein some details have been omitted to allow viewing some internal details of the device;

figure 5 shows a perspective view of the device of figure 4, from the side of arrow V of figure 4;

figure 6 shows a perspective view of the device of figure 5 according to a further embodiment of the present invention;

figures 7-9 show cutaway views of the device of figure 2, along the section line III-III of figure 2, according to further different embodiments of the present invention.

Elements or parts of elements in common between the embodiments described below are referred to with the same reference numerals.

With reference to the above figures, reference numeral 4 globally denotes a warming device for food containers 8, such as plates.

The device comprises a structure that delimits a containment space 12 for the plates 8, for example provided with sliding doors 14 that allow access and closing of the space itself.

At least one shelf 16 is arranged into space 12, suitable for supporting plates 8.

Device 4 further comprises ventilation means (not shown), suitable for generating a ventilation flow to send towards said containers 8 and warming means (not shown) suitable for warming said ventilation flow for warming containers 8.

Shelf 16 comprises a rest surface 20 for containers 8, extending along a prevailing extension direction X-X, and delimited by side edges 24, preferably parallel to said prevailing extension X-X.

According to a preferred arrangement, the ventilation means generate an air flow substantially directed parallel to the prevailing direction X-X.

Advantageously, the rest surface 20 and the side edges 24 contain a chamber 28 suitable for receiving the ventilation flow and having at least one outflow opening 32 for the outlet of the ventilation flow from shelf 16.

According to an embodiment, the outflow opening 32 comprises at least one window 36, arranged opposite the rest surface 20, so as to allow the outlet of the ventilation flow from the bottom side of shelf 16.

According to an embodiment, the outflow opening 32 comprises at least one outflow hole 40 arranged on said side edges to allow the outlet of the ventilation flow from the side edges 24 of shelf 16.

Preferably, shelf 16 comprises partitions 44 that into said chamber 28 delimit at least one distribution channel 48 that receives the air from the ventilation means and conveys it in output from said shelf 16 through the outflow openings 32, 36, 40.

Preferably, the distribution channel 48 is directed along the prevailing direction X-X of shelf 16.

According to an embodiment, partitions 44 delimit the distribution channel 48 with the side edges 24, on the side of chamber 28.

In other words, partitions 44 are arranged close to the side edges 24 from the side of chamber 28 and convey along the edges the warming air that comes out through the outflow holes 40 arranged along edges 24.

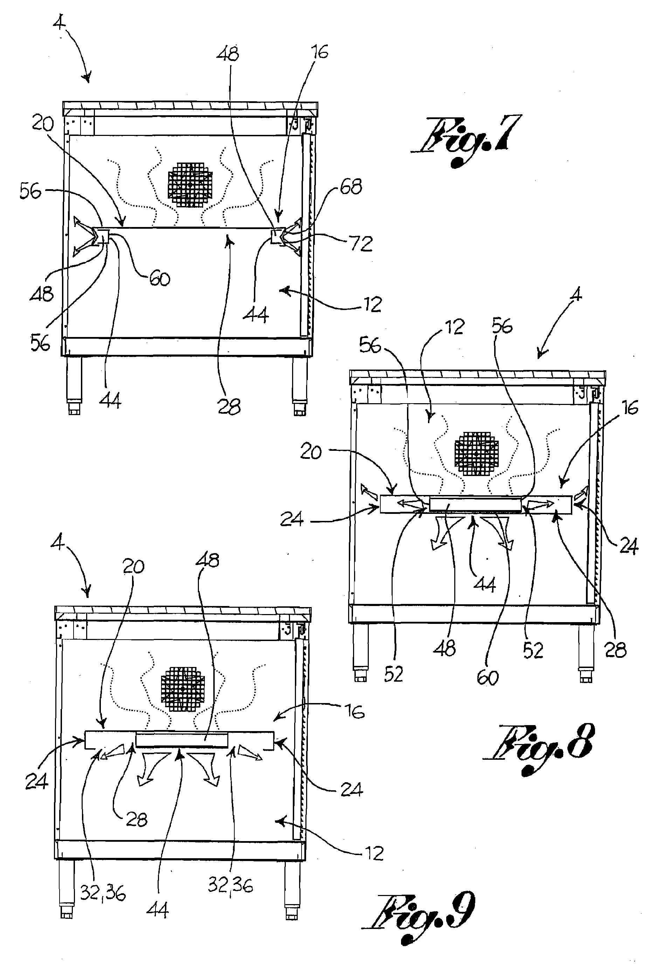

Preferably, the device comprises a pair of partitions 44 arranged adjacent opposite edges 24 of shelf 16 substantially parallel to said prevailing direction X-X (figure 7).

According to possible embodiments, partitions 44 comprise distribution holes 52 suitable for directing the flow received from the ventilation means towards the outflow openings 32, 36, 40.

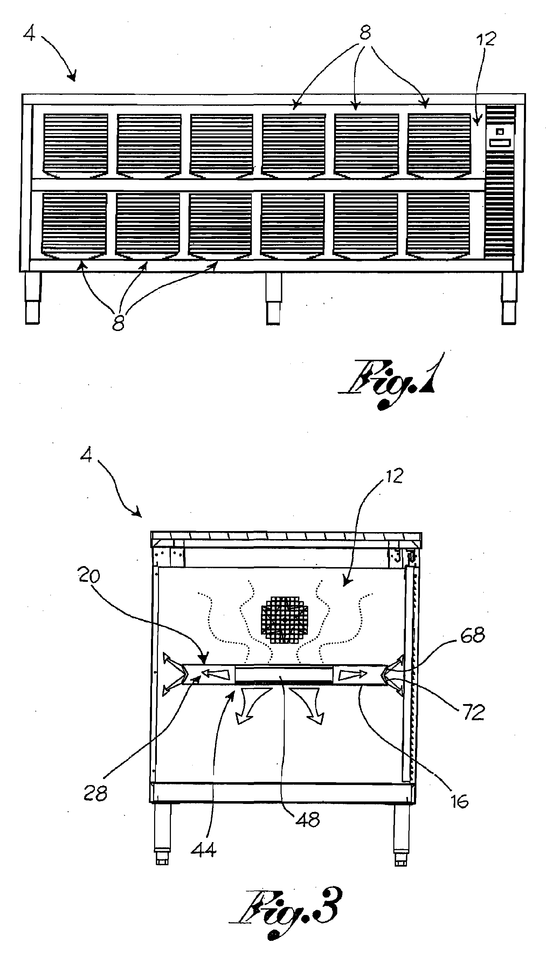

For example, partitions 44 delimit the distribution channel 48 with the rest surface 20, on the side of chamber 28 (figures 3, 8, 9).

The partitions may comprise a pair of branches 56 and a crosspiece 60 so as to form a distribution channel 48 having a 'U' configuration.

For example, the partitions comprise distribution holes 52 arranged on branches 56 and/or on crosspiece 60.

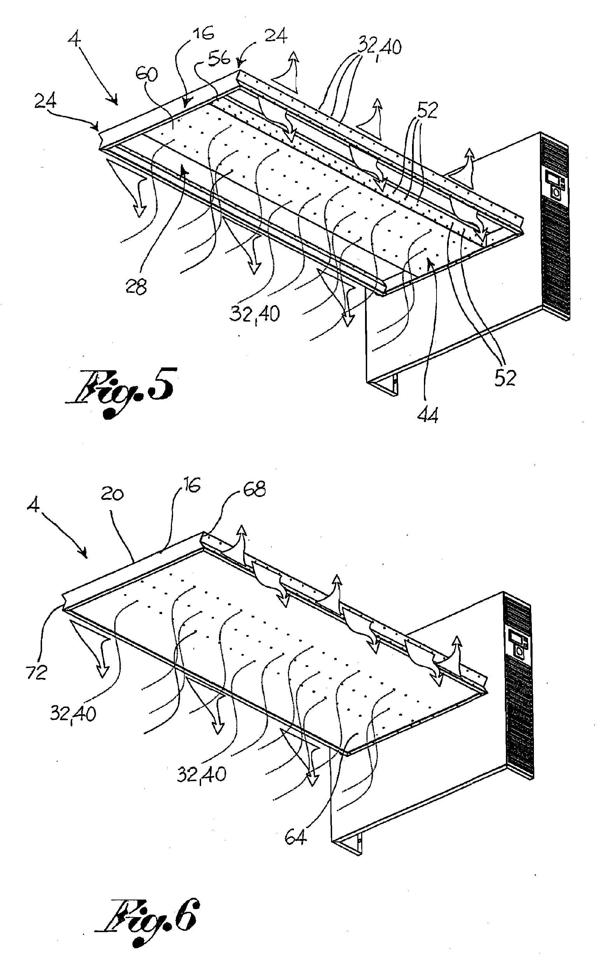

According to an embodiment, opposite the rest surface 20, shelf 16 comprises closing panels 64 suitable for conveying the warming flow towards edges 24 of the shelf provided with outflow holes 40 (figure 6).

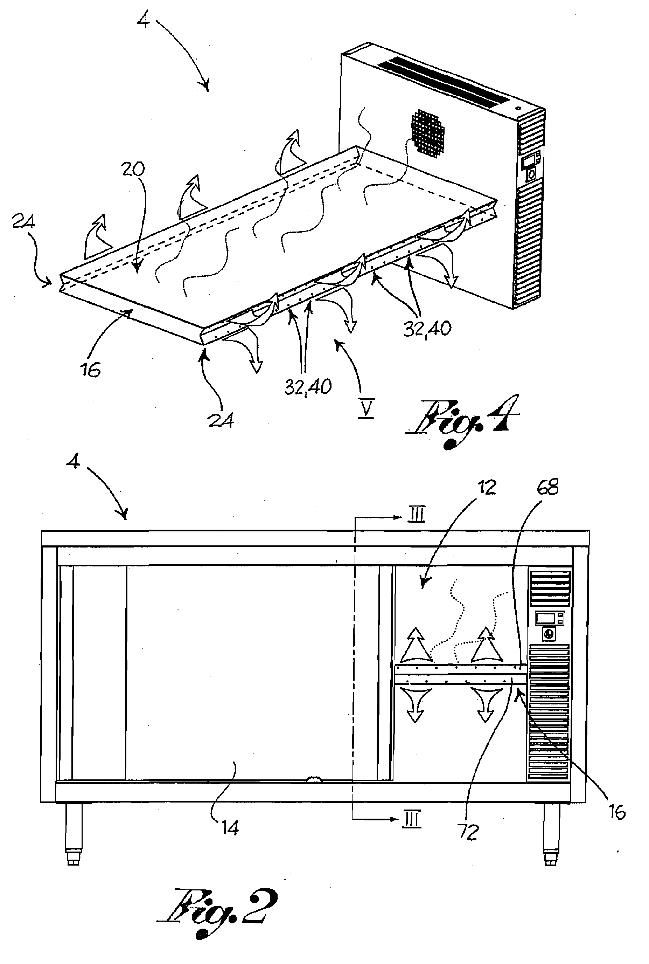

Preferably, the side edges 24 exhibit a 'V' profile relative to a section plane perpendicular to said prevailing extension direction X-X so as to determine a top outflow wall 68, opposite the rest surface 20, and a bottom outflow wall 72 facing the rest surface 20 (figures 3-6, 7).

Preferably the outflow walls comprise a plurality of outflow holes 40 so as to direct warming air flow opposite relative to the rest surface 20. In other words, the bottom outflow wall 72 directs the flow upwards, that is, towards the rest surface 20, whereas the top outflow wall 68 directs the flow downwards, that is, opposite the rest surface 20 (figure 6).

Preferably, the outflow holes 40 are staggered relative to each other relative to the extension direction X-X, so as to obtain opposite air flows not incident to one another. In other words, the bottom and top flows do not intersect since the relevant outflow holes 40 are axially staggered relative to each other.

Preferably, said outflow holes 40 on the top 68 and bottom 72 walls are arranged at a pitch along the extension of edges 24 of shelves 16.

Preferably, shelves 16 are made of metal so as to favour the conduction of heat also through the contact between the plate bottoms and the rest surface 20.

The operation of a warming device according to the invention shall now be described.

The ventilation means generate an air flow that is warmed by warming means; for example, the warming means are provided with electrical resistances directly impinged by the air flow before it is sent to chamber 28.

The air flow is conveyed into the shelves, preferably according to a direction parallel to direction X.

The forced air is guided into shelves 16, preferably by partitions 44. The air can thus come out from the distribution holes 52 of the partitions, if provided, and can thus empty chamber 28 through the outflow openings 32, 36, 40.

The outflow openings 32, 36, 40 convey the air towards the bottom portions of shelves 16, opposite the rest surfaces 20, as well as towards the edges 24 of shelves 16.

Preferably, opposite flows are obtained from edges 24 of shelves 16, approaching and away from the rest surface 20.

Shelves 16, preferably made of metal, warm the plates also by conduction through the contact between the rest surface 20 and the bottoms of plates 8.

As can be understood from the description, the device according to the invention allows overcoming the disadvantages of the prior art.

In particular, the warming device described allows warming the food containers evenly in all the inner zones of the plate containment space.

The device of the present invention does not require the use of ventilation means arranged in multiple points of the containment space for making the inside temperature even.

The reversed and staggered arrangement of the holes on the shelf edges allows creating opposite air flows so as to make the temperature into the space even.

The warming device is inexpensive and simple to manufacture.

A man skilled in the art may make several changes and adjustments to the devices described above in order to meet specific and incidental needs, all falling within the scope of protection defined in the following claims.

## Claims

1. Warming device (4) for food containers (8), comprising
- at least one rest surface (16) suitable for making a support for at least one food container (8),
- ventilation means, suitable for generating a ventilation flow to send towards said containers (8),
- warming means, suitable for warming said ventilation flow for warming said containers (8),
**characterised in that**
- the at least one shelf (16) comprises a rest surface (20) for the containers (8), extending along a prevailing extension direction (X-X), and delimited by side edges (24), the rest surface (20) and the side edges (24) containing a chamber (28) suitable for receiving the ventilation flow and having at least one outflow opening (32, 36, 40) for the outlet of the ventilation flow from the shelf (16).

2. Device (4) according to claim 1, wherein said outflow opening comprises at least one window (36), arranged opposite the rest surface (20), so as to allow the outlet of the ventilation flow from the bottom side of shelf (16).

3. Device (4) according to claim 1 or 2, wherein said outflow opening (32, 36, 40) comprises at least one outflow hole (40) arranged on said side edges (24) to allow the outlet of the ventilation flow from the side edges (24) of the shelf.

4. Device (4) according to any one of the previous claims, wherein the shelf (16) comprises partitions (44) that into said chamber (28) delimit at least one distribution channel (48) that receives the air from the ventilation means and conveys it in output from said shelf (16) through the outflow openings (32, 36, 40).

5. Device (4) according to claim 4, wherein the distribution channel (48) is directed along the prevailing direction (X-X) of the shelf (16).

6. Device (4) according to claim 4 or 5, wherein the partitions (44) delimit said distribution channel (48) with the side edges (24), the edges (24) comprising outflow holes (40) so as to make the air flow outside the shelf (16).

7. Device (4) according to claim 4, 5 or 6, comprising a pair of partitions (44) arranged adjacent opposite edges (24) of the shelf (16) substantially parallel to said prevailing direction (X-X).

8. Device (4) according to any one of claims 4 to 7, wherein the partitions (44) comprise distribution holes (52) suitable for directing the flow received from the ventilation means towards the outflow openings (32, 36, 40).

9. Device (4) according to any one of claims 4 to 8, wherein the partitions (44) delimit the distribution channel (48) with the rest surface (20), on the side of the chamber (28).

10. Device (4) according to any one of claims 4 to 9, wherein the partitions (44) comprise a pair of branches (56) and a crosspiece (60) so as to make a distribution channel (48) having a 'U' shape.

11. Device (4) according to claim 10, wherein the partitions (44) comprise distribution holes (52) arranged on said branches (56).

12. Device (4) according to claim 10 or 11, wherein the partitions (44) comprise distribution holes (52) arranged on said crosspiece (60).

13. Device (4) according to any one of the previous claims, wherein the shelf (16) opposite the rest surface (20) comprises closing panels (64) suitable for conveying the warming flow towards the edges (24) of the shelf (16) provided with outflow holes (40).

14. Device (4) according to any one of the previous claims, wherein said side edges (24) have a 'V' profile relative to a section plane perpendicular to said prevailing extension direction (X-X) so as to determine a top outflow wall (68), opposite said rest surface (20), and a bottom outflow wall (72) facing said rest surface (20).

15. Device (4) according to claim 14, wherein said outflow walls (68, 72) comprise a plurality of outflow holes (40) so as to direct warming air flows opposite relative to the rest surface (20).

16. Device (4) according to claim 15, wherein said outflow holes (40) are staggered relative to each other relative to said extension direction (X-X), so as to obtain opposite air flows not incident to one another.

17. Device (4) according to claim 15 or 16, wherein said outflow holes (40) on the top and bottom walls (68, 72) are arranged at a pitch along the extension of the edges (24) of the shelves (16).

18. Device (4) according to any one of the previous claims, wherein said ventilation means generate an air flow substantially directed parallel to said prevailing direction (X-X).

19. A device (4) according to any one of the previous claims, wherein said shelves (16) are made of metal.
